(19)

Europäisches
Patentamt
European
Patent Office
Office européen
des brevets

(11) **EP 1 587 162 B1**

(12) **EUROPEAN PATENT SPECIFICATION**

(45) Date of publication and mention
of the grant of the patent:
**14.05.2008 Bulletin 2008/20**

(51) Int Cl.:
***B25J 9/16*** *(2006.01)*        *H01Q 11/08* *(2006.01)*
***G05B 19/401*** *(2006.01)*

(21) Application number: **04012356.4**

(22) Date of filing: **25.05.2004**

(54) **Self-calibrating sensor orienting system**

Selbstkalibrierendes Sensororientierungssystem

Système d' orientation de capteur auto-calibrant

(84) Designated Contracting States:
**DE FR GB**

(30) Priority: **16.04.2004 EP 04009123**

(43) Date of publication of application:
**19.10.2005 Bulletin 2005/42**

(73) Proprietor: **Honda Research Institute Europe GmbH**
**63073 Offenbach/Main (DE)**

(72) Inventors:
• **Rodemann, Tobias,**
**c/oHonda Research**
**63073 Offenbach/Main (DE)**
• **Joublin, Frank,**
**c/oHonda Research**
**63073 Offenbach/Main (DE)**

(74) Representative: **Rupp, Christian et al**
**Mitscherlich & Partner**
**Patent- und Rechtsanwälte**
**Sonnenstrasse 33**
**80331 München (DE)**

(56) References cited:
• **MARJANOVIC M ET AL: "Self-Taught Visually Guided Pointing for a Humanoid Robot" [Online] 1996, FROM ANIMALS TO ANIMATS 4. PROCEEDINGS OF THE FOURTH INTERNATIONAL CONFERENCE ON SIMULATION OF ADAPTIVE BEHAVIOR MIT PRESS CAMBRIDGE, MA, USA, PAGE(S) 35 - 44 , XP002321713 ISBN: 0-262-63178-4 Retrieved from the Internet: URL:http:// groups.csail.mit.edu/lbr/hrg/19 96/scaz-sab96.pdf> [retrieved on 2005-03-23] Section 4.2, Section 6**
• **KUHN D ET AL: "Cooperation of neural networks applied to a robotic hand-eye coordination task" SYSTEMS, MAN AND CYBERNETICS, 1995. INTELLIGENT SYSTEMS FOR THE 21ST CENTURY., IEEE INTERNATIONAL CONFERENCE ON VANCOUVER, BC, CANADA 22-25 OCT. 1995, NEW YORK, NY, USA,IEEE, US, vol. 4, 22 October 1995 (1995-10-22), pages 3694-3699, XP010194872 ISBN: 0-7803-2559-1**
• **BUESSLER J-L ET AL: "Visually guided movements: learning with modular neural maps in robotics" NEURAL NETWORKS, ELSEVIER SCIENCE PUBLISHERS, BARKING, GB, vol. 11, no. 7-8, 11 October 1998 (1998-10-11), pages 1395-1415, XP004146728 ISSN: 0893-6080**
• **MILLER W T III: "Real-time application of neural networks for sensor-based control of robots with vision" IEEE TRANSACTIONS ON SYSTEMS, MAN AND CYBERNETICS USA, vol. 19, no. 4, 31 August 1989 (1989-08-31), pages 825-831, XP002322260 ISSN: 0018-9472**

- PEDRENO-MOLINA J L ET AL: "Trajectories adaptive prediction based on image processing cerebellar model for ocular-motor systems in robotic heads" 2001 IEEE INTERNATIONAL CONFERENCE ON SYSTEMS MAN AND CYBERNETICS. SMC 2001. TUCSON, AZ, OCT. 7 - 10, 2001, IEEE INTERNATIONAL CONFERENCE ON SYSTEMS, MAN AND CYBERNETICS, NEW YORK, NY : IEEE, US, vol. VOL. 1 OF 5, 7 October 2001 (2001-10-07), pages 3008-3012, XP010568891 ISBN: 0-7803-7087-2
- DEAN P ET AL: "SACCADE CONTROL IN A SIMULATED ROBOT CAMERA-HEAD SYSTEM: NEURAL NET ARCHITECTURES FOR EFFICIENT LEARNING OF INVERSE KINEMATICS" 1 November 1991 (1991-11-01), BIOLOGICAL CYBERNETICS, SPRINGER VERLAG, HEIDELBERG, DE, PAGE(S) 27-36 , XP000262387 ISSN: 0340-1200 * the whole document *
- WIDROW B ET AL: "30 YEARS OF ADAPTIVE NEURAL NETWORKS: PERCEPTRON, MADALINE, AND BACKPROPAGATION" PROCEEDINGS OF THE IEEE, IEEE. NEW YORK, US, vol. 78, no. 9, 1 September 1990 (1990-09-01), pages 1415-1441, XP000165405 ISSN: 0018-9219
- CIMPONERIU A ET AL: "Intelligent control with the growing competitive linear local mapping neural network for robotic hand-eye coordination" KNOWLEDGE-BASED INTELLIGENT ELECTRONIC SYSTEMS, 1998. PROCEEDINGS KES '98. 1998 SECOND INTERNATIONAL CONFERENCE ON ADELAIDE, SA, AUSTRALIA 21-23 APRIL 1998, NEW YORK, NY, USA,IEEE, US, vol. 3, 21 April 1998 (1998-04-21), pages 46-52, XP010310247 ISBN: 0-7803-4316-6

## Description

The present invention relates to the control of an orienting/positioning device having sensor means, the input space of which can be changed by a real-world action controlled by actuating means of the orienting/positioning device. Thereby it is preferably envisaged to orient/position the sensor means such that a pattern recognised in the input space of the sensor means is transferred to a target position, such as e.g. the centre of the input space coordinates of the sensor means.

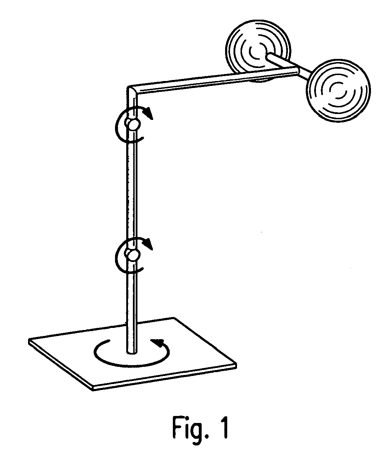

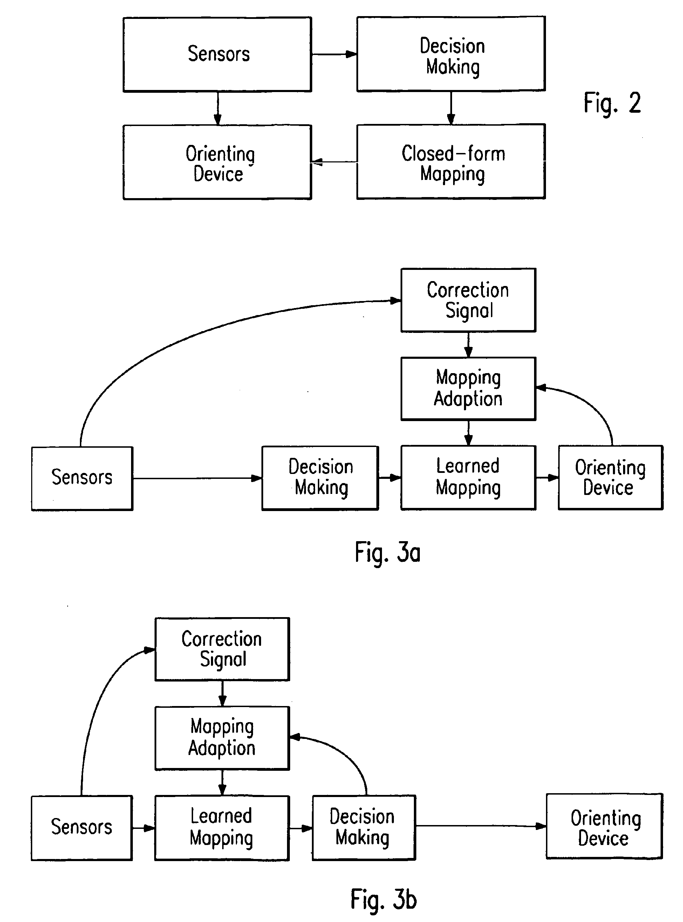

The background of the present invention is the field of orienting/positioning devices, which shall now be explained with reference to figures 1 and 2. Figure 1 thereby shows a stereo camera, which can be the directed in several degrees-of-freedom. It is now assumed that the shown camera is to be directed such that a detected visual target present somewhere in the input space of the camera moves into the origin of the input space. Figure 2 shows a known process to calculate and carry out an action (i.e. movement of the camera) in order to achieve said object. In a first step the output of the sensor (here: camera) is evaluated to make a decision regarding a target position in the multi-dimensional input space of the sensor, which target position can e.g. be a recognised sound source. In a further step the sensor coordinates (angles etc.) are mapped into the motor coordinates (voltages, currents etc.) using a predefined look-up table or analytical function in order to generate the actuator (motor) command necessary for the before decided new orientation of the camera.

Typical examples for sensor means providing explicit orientation information are e.g. an image sensor array, a radar image sensor array or a chemical receptor sensor array. A typical sensor means providing implicit orientation information is the use of stereo microphones to localise a sound source. Sensor means providing implicit orientation information require an extraction of the orientation information before said orientation information can be used.

Robots comprising sensors, which supply orientation information are known as orienting robots. It is a disadvantage of such orienting robots that they frequently require calibration to work properly. Such a calibration must be done after every change in system geometry (e.g. when the physical relation between a sensor and an actuator of the robot is changed), after every modification (e.g. lens replacement, a motor modification) and if the robot is used in a changing or uncontrolled environment.

In certain environments a manual calibration by a user is not possible or desired (e.g. if the robot is a probe sent to a foreign planet). Furthermore, in case of frequent changes in system geometry, of frequent modification of the sensors or motors or an uncontrolled environment frequent calibration is very time consuming and laborious.

Therefore, self-calibrating orienting robots have been proposed.

Such self-calibrating orienting robots usually use calibration scenarios, mathematical analysis or parameter/hardware tuning with human supervision.

All of the above calibration techniques suffer from one of the following disadvantages:

The use of calibration scenarios normally requires the return of actuators of the robot to reference points. Therefore, calibration in a new and/or uncontrolled environment frequently is not possible. Moreover, said calibration by using reference points frequently is not sufficient to solve the problem of non-linearity of motor responses.

Calibration by mathematical analysis has the drawback that several implicit assumptions are necessary which frequently result in strong simplifications. Often only a subset of variations is taken into account. Thus, the accuracy of said calibration method usually is insufficient. Furthermore, calibration by mathematical analysis frequently is not applicable for online calibration due to the high complexity. Finally, the analysis has to be redefined for any voluntary or involuntary change of the set-up.

Parameter/hardware tuning with human supervision has the drawback that it requires human expert intervention. Therefore, this calibration solution is not suitable for autonomous robots. Moreover, this calibration technique usually is very time consuming and highly depends on the experience of the expert.

A robotic systems comprising sensor means, in particular cameras, to provide orientation information, being controlled by adaptive learning algorithms, is disclosed in the document : KUHN D ET AL: "Cooperation of neural networks applied to a robotic hand-eye coordination task" SYSTEMS, MAN AND CYBERNETICS, 1995. INTELLIGENT SYSTEMS FOR THE 21ST CENTURY., IEEE INTERNATIONAL CONFERENCE ON VANCOUVER, BC, CANADA 22-25 OCT. 1995, NEW YORK, NY, USA,IEEE, US, vol. 4, 22 October 1995, pages 3694-3699, ISBN: 0-7803-2559-1. It discloses a method for positioning / orienting a robot arm and a robotic head. Two 1-dimensional neural networks are employed for control of the vision system and one SOM neural network is employed for control of the robot arm. The latter neural network comprises "REACT" sub-networks. The vision control networks have the same structure as these "REACT" sub-networks and are adapted through the same methods.

Therefore, it is an object of the present invention to provide a method of controlling an orienting system and a self-calibrating orienting system, which allows an auto-calibration of the system without human intervention with high accuracy.

It is a further object of the present invention to provide a method of controlling orienting system and a self-calibrating orienting system which is adapted to deal with non-linearities in motor/sensor responses and which is adapted to be used in a changing and/or uncontrolled environment where maintenance is not possible or desired.

The above objects are achieved by means of the features of the independent claims. The dependent claims develop further the central idea of the present invention.

According to a first aspect of the present invention a method for controlling an orienting/positioning system is proposed,

the orienting system comprising at least one sensor means and actuator means for controlling an orienting and/or positioning action of the sensor means.

The method comprises the following steps:

- (S1) Evaluating pre-action output information of said sensor means in order to detect the position of a pattern in the input space of the sensor means;
- (S2) Deciding on a targeted post-action position of said pattern in the input space of said sensor means;
- (S3) Defining a command for the actuator means by mapping any deviation of the pre-action position and the targeted post-action position in the input space coordinates of the sensor means to actuator control coordinates using a predefined mapping function;
- (S4) Orienting/positioning the sensor means by the actuator means according to the defined command in order to carry out an orienting/positioning action; and
- (S5) Detecting the real post-action position of the pattern in the input space of said sensor means;
- (S6) adapting the mapping function used in step S3 based on any difference of the real post-action position and the targeted post-action position of the pattern in the input space of the sensor means in order to carry out an incremental adaptive learning of the mapping function, wherein steps S1 to S6 are cyclically repeated at least once using the respectively adapted mapping function.

Note that in step S4 the sensor means can be moved either directly or indirectly (e.g. by moving the support of the sensor means as it is the case when the sensor means are mounted on a vehicle or robot).

In step S6 a correction signal can be calculated based on any difference of the real post-action position and the targeted position of the pattern in the input space of the sensor means. The mapping function can be adapted taking into account the correction signal and the pre-action position of the pattern in the input space of the sensor means.

Alternatively in step S6 a correction signal can be calculated on the basis of the pre-action position, which has actually been moved to the targeted post-action position when carrying out the action. The mapping function can be adapted taking into account the correction signal and the pre-action position of the pattern in the input space of the sensor means.

Before adapting the mapping function, the adaptation vector can be multiplied with a factor larger than or equal to 0 and smaller than or equal to 1 in order to control the adaptation rate for the mapping function.

The method can furthermore comprise the step of computing a confidence value based on the plausibility of the difference of the real post-action position and the targeted position of the pattern in the input space of the sensor means, e.g. by means of the correlation value of the selected sensor patterns. The adaptation vector can then be modulated with the confidence value such that the adaptation rate depends on the confidence of e.g. the correlation between selected sensor patterns before and after the action.

The mapping function can be implemented by means of a look-up table. The look-up table associates sensor coordinates with the corresponding actuator coordinates.

In steps S1 to S6, for each cycle, not only the position of the pattern, but also a neighbourhood in a defined range surrounding this position is used, wherein the range of the neighbourhood can be changed between two subsequent cycles.

The adaptation of the mapping function can be carried out in the sensor coordinates or in the actuator coordinates.

Another aspect of the present invention relates to a method for controlling an orienting/positioning system, the orienting system comprising at least one sensor means and actuator means for controlling an orienting and/or positioning action of the sensor means.

The method comprises preferably the following steps:

- (S1) Mapping output information of said sensor means in the input space coordinates of the sensor means (1) to actuator control coordinates using a predefined mapping function;
- (S2) Deciding on a targeted post-action position, the decision taking place in the actuator control coordinates;
- (S3) Defining a command for the actuator means (41, 42, 43) based on the result of the decision; and
- (S4) Orienting/positioning the sensor means (1) by the actuator means according to the defined command in order to carry out an orienting/positioning action of the sensor means.

Outputs of several sensor means can be individually mapped into actuator coordinates and then combined, wherein the decision in step S2 can be carried out on the basis of the result of the combination.

Constraints of the actuator means can be taken into account when making the decision in step S2.

Another aspect of the present invention relates to a computer software product adapted for implementing such a method when running on a computing device.

A still other aspect of the present invention relates to an auto-calibrating orienting/positioning system. The system preferably comprises at least one sensor means, computing means and actuator means for controlling an orienting and/or positioning action of the sensor means, the computing means comprising:

- means for evaluating pre-action output information of said sensor means in order to detect the position of a pattern in the input space of the sensor means (1);
- means for deciding on a targeted post-action position of said pattern in the input space of said sensor means;
- means for commanding the actuator means, the command being generated by mapping any deviation of the pre-action position and the targeted post-action position in the input space of the sensor means to actuator control coordinates using a predefined mapping function;
- means for detecting the real post-action position of the pattern in the input space of said sensor means; and
- means for calibrating the mapping function based on any difference of the real post-action position and the targeted post-action position of the pattern in the input space of the sensor means in order to carry out an incremental adaptive learning of the mapping function.

In the following detailed description, the present invention is explained by reference to the accompanying drawings, in which like reference characters refer to like parts throughout the views wherein

Fig. 1        shows an orienting device according to the prior art;

Fig. 2        shows an orienting action calculating process according to the prior art;

Fig. 3a, 3b    show schematically alternative processes according to the present invention;

Fig. 4a, 4b    illustrate different embodiments for calculating the correction signal for an adaptive learning of the mapping function;

Fig. 5        illustrates an option for accelerating the adaptation process;

Fig. 6        illustrates the introduction of confidence values in the learning process of figures 3a or 3b, and

Fig. 7        shows a block diagram of the inventive self-calibrating orienting/positioning system.

A process according to the present invention shall now be explained with reference to figure 3a. Comparable to the known process (see figure 2) the output signal of a sensor is evaluated in order to make a decision regarding a target position of a recognised pattern in the input space of the sensor means 1, which target position is to be achieved by a pre-calculated "one-strike" action. This means that an action, i.e. a planned interaction with the real world is first set-up and then carried out in its entirety. Only after the action is completed, any differences between the originally planned action and the real-world result are evaluated and additional correction actions can be planned and carried out.

For mapping the sensor coordinates of the decided action into actuator coordinates, according to the present invention an adaptively learned mapping is used. In a first cycle of the orientation a roughly estimated or arbitrarily set mapping function is used. In at least one further cycle an improved "learned" mapping function will be used.

This approach has the advantage that in case the sensor/actuator characteristics change (wear, change of the set-up, replacement, temperature fluctuations,...), the correct sensor/actuator mapping will be automatically achieved via a few learning/adaptation cycles without human interference and without analytically (re-) defining the correlation between actuator and sensor coordinates.

In order to carry out the adaptive learning process, once a cycle is completed and an action is carried out, the success of the action, i.e. whether the pattern has actually been brought close to the target position, is evaluated and depending on any deviation a correction signal is generated and fed to the mapping unit in order to carry out an incremental learning step. This cycle can be repeated until the deviation between the planned action and the real-world result is smaller than a preset threshold value or can be continued indefinetely.

Note that the correction signal is generated after the action, which was meant to bring upon the desired result in one strike, has been completed.

To summarize, according to this example the action to be taken is decided in the sensor coordinates; the decision making result is then mapped to the actuator (motor) coordinates.

Figure 3b shows an alternative arrangement in which the sensor coordinates are first mapped to the actuator coordinates before carrying out the decision making process in the actuator coordinate system. This arrangement has the advantage that e.g. restrictions on the actuator coordinates (maximum ranges, speed, acceleration etc.) can be easier taken into account during the decision now taking place in the actuator coordinates.

Further on, according to the alternative arrangement according to figure 3b output signals of different, eventually heterogeneous sensors can be individually mapped into respective actuator coordinates which can then be easily combined in order to make the decision on the action to be taken on the basis on the combined actuator coordinates.

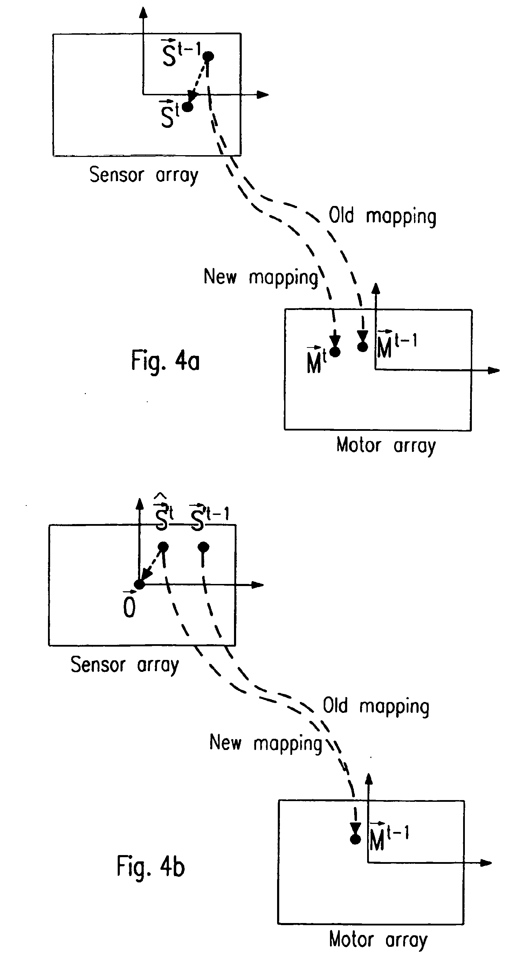

With reference to figure 4a a first embodiment of the calculation of a correction signal and the adaptation of the mapping function shall be explained. As already explained, it is the aim of the mapping to translate the coordinates of the action decided in sensor coordinates in coordinates adapted for the control of the actuator means. Consequently figure 4a shows both a diagram of the sensor array and the motor array, respectively. In the present example it is envisaged to carry out an action by which the pre-action location $\vec{S}_x^{t-1}$ is transferred to the centre of the sensor array (sensor input space). Using a pre-set mapping function it is assumed that the corresponding actuator (motor) command be $\vec{M}_x^{t-1}$. Using this motor command, however, the pre-action location $\vec{S}_x^{t-1}$ is not exactly transferred to the target position in the sensor array, but to the post-action location $\vec{S}_x^t$.

According to the present embodiment now the incremental learning adaptation of the mapping function is carried out as a linear extrapolation, i.e. the adaptively corrected motor command for the coordinate (degree-of-freedom) $x$ and to be used for the next cycle is:

$$\vec{M}_x^{t+1} = \vec{M}_x^{t-1} + \alpha_x \left( \hat{\vec{M}}_x^t - \vec{M}_x^{t-1} \right)$$

with $\hat{\vec{M}}_x^t = \vec{M}_x^{t-1} \cdot \dfrac{\vec{S}_x^{t-1}}{\left( \vec{S}_x^{t-1} - \vec{S}_x^t \right)}$, and

$\alpha_x$ being an optional parameter (being larger than or equal to 0 and smaller than or equal to 1) which controls the adaptation rate of the coordinate $x$.

Note that this extrapolation-type learning process can also be used for non-linear mappings.

Further on, the learning process as shown in figure 4a can be applied both to the decision making strategies of figure 3a and figure 3b.

Finally, this learning process can also be used in case of a single as well as multiple stimulus-emitting sources in the input space of the sensor(s).

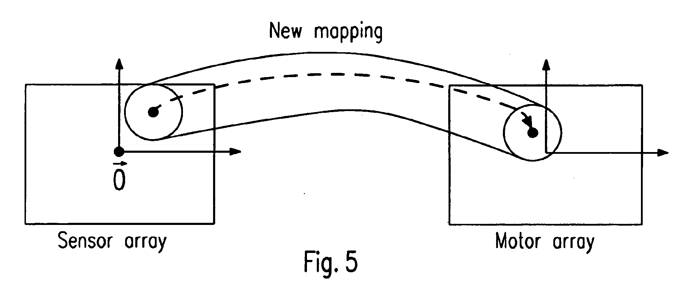

In order to accelerate the learning process (potentially slowed down by the adaptation rate parameter $\alpha_x$), more than one location can be used in each cycle. As shown in figure 5, to speed-up the convergence of the adaptation, a defined neighbourhood of a location can be used. Thereby, by making the range of the neighbourhood variable in time, it is possible to achieve a mapping function that remains plastic for the case of sudden de-calibration of the system and at the same time locally stable to guarantee an accurate representation of any non-linearities.

With reference to figure 4b a second embodiment of the calculation of a correction signal and the adaptation of the mapping function shall be explained. Again, it is the aim of the mapping to translate the coordinates of the action decided in sensor coordinates in coordinates adapted for the control of the actuator means. Consequently also figure 4b shows both a diagram of the sensor array and the motor array, respectively. In the present example it is envisaged to carry out an action by which the pre-action location $\vec{S}_x^{t-1}$ is transferred to the centre of the sensor array (sensor input space). Using a pre-set mapping function it is assumed that the corresponding actuator (motor) command be $\vec{M}_x^{t-1}$. Using this motor command, however, the pre-action location $\vec{S}_x^{t-1}$ is not exactly transferred to the target position in the sensor array, but to the post-action location $\vec{S}_x^t$. Now, according to the present second embodiment, the reference location is identified which actually has been transferred to the target position when carrying out the action as commanded by $\vec{M}_x^{t-1}$. Further on, contrary to the first embodiment, the adaptation of the mapping is carried out in the sensor space according to the following formula:

$$\vec{S}_x'' = \vec{S}_x''^{t-1} + \alpha_x \left( \hat{\vec{S}}_x''^{t-1} - \vec{S}_x''^{t-1} \right)$$

with $\vec{S}_x''$ being a corrected targeted post-action position for the dimension $x$ at the time $t$, $\vec{S}_x''^{t-1}$ being the (uncorrected) targeted post-action position for the dimension $x$ at the time $t-1$, $\hat{\vec{S}}_x''^{t-1}$ being the pre-action reference location for the dimension $x$ at the time $t-1$ and $\alpha_x$ being a constant (being larger than 0 and smaller than 1) which controls the rate of adaptation for the dimension $x$.

Note that this learning process can also be used both for the learning strategies of figures 3a and 3b. It is a comparatively quick method, however, it requires a plurality of stimulus-emitting sources being present in the input space - if there is only a single stimulus-emitting source, it is obviously impossible to find the reference location as defined above.

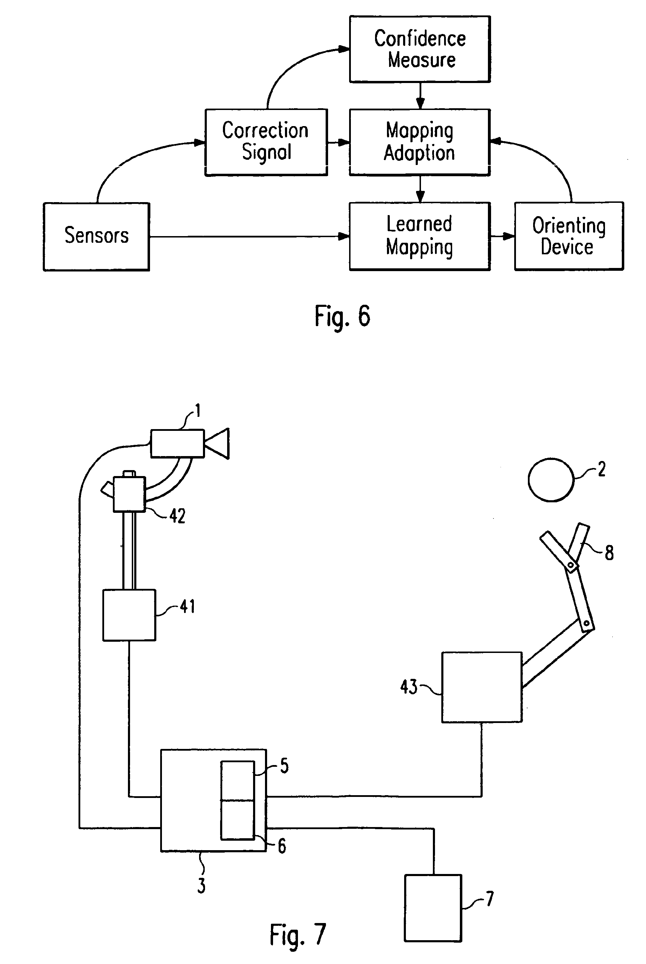

Figure 6 shows schematically that a confidence measure can be derived from the correction signal. The adaptation rate can then be modulated with the confidence measure (having a value between 0 and 1). The introduction of the confidence measure minimizes the occurrence of erroneous adaptation steps which can take place in case of incorrect estimations of the correction signal. The correction signal is usually computed by a correlation method, in which case the correlation can be used (after normalization) as a confidence measure.

Fig. 7 schematically shows a self-calibrating orienting/positioning system according to the present invention.

The system comprises sensor means 1 for gathering information of the real world in order to localise a pattern 2 (e.g. of a recognized defined object) in the at least one-dimensional input space of the sensor means 1. Alternatively, the sensor means 1 may be a radar image sensor array, a chemical receptor sensor array or a stereo microphone for localising a sound emitted by the object 2 or any other directional sensor.

The sensor means 1 is mounted on a frame comprising actuator means 41 and 42, which are e.g. adapted to tilt and pan of the sensor means 1. In the present example said actuator means 41 and 42 can be e.g. electrical linear motors.

In consequence, the actuator means 41 and 42 are adapted to change the input space of the sensor means 1 by moving the sensor means 1 itself. Note that any planned process adapted to change the input space of the sensor means 1 by a manipulation in the real world is called an "action" within the framework of the present specification. Correspondingly "pre-action" and "post-action", respectively, designates states before and after such an action controlled by the actuator means has taken place.

Both the sensor means 1 and the actuator means 41 and 42 are connected to computing means 3.

In Fig. 7 said computing means 3 is a computer which is adapted to define a targeted post-action position information of the pattern in the input space of the sensor means 1 and to calculate a command for the actuator means 41 and 42 to move the sensor means 1. Alternatively or additionally the computing means can be adapted to calculate a command to move a manipulator 8 of a robot 43, the movement of the manipulator 8 also being an action suited to change the input space of the sensor means 1 under the control of the actuator means 41 and 42.

When calculating the command for the respective actuator means 41, 42 or the robot 43, the computing means uses pre-action position information provided by said sensor means 1, i.e. information on the position of the pattern in the input space of the sensor means 1 before the action has taken place, and a targeted post-action position information, i.e. an information representing a target position of the pattern 2 after the action has taken place. The target position can e.g. be the centre of the input space of the sensor means 1. Alternatively, particularly in case the actuator means control e.g. the manipulator arm of a robot etc., the target position can be set as the position (still in the input space of the sensor means 1) of an object to be manipulated by the robot.

The computing means 3 comprises a determining means 5 and a comparing means 6.

The determining means 5 is adapted to determine whether a post-action position information output by the sensor means 1, after an action of said actuator means 41, 42 and / or said robot 43 with said object 2 and/or said manipulator 8 by moving said sensor means 1 or by moving said manipulator 8 is completed, coincides with the targeted post-action position as defined before by the computing means 3.

If the determining means 5 determine that the post-action object-sensor position information does not match the targeted object-sensor position information, the computing means 3 are further adapted to correct the calculated command for the actuator means 41, 42 and the robot 43, respectively by using the comparison result output by the comparing means 6. The corrected command can then be used for a future action.

In order to implement the learning strategy of figure 3a, the computing means 3 is adapted to calculate a difference between the post-action object-sensor position information and the targeted post-action object-sensor position information and to automatically correct the calculate command for the actuator means 41,42,43 by using the following formula:

$$\vec{M}_x^{\,t+1} = \vec{M}_x^{\,t-1} + \alpha_x \left( \hat{\vec{M}}_x^{\,t} - \vec{M}_x^{\,t-1} \right)$$

with $\hat{\vec{M}}_x^{\,t} = \vec{M}_x^{\,t-1} \cdot \dfrac{\vec{S}_x^{\,t-1}}{\left( \vec{S}_x^{\,t-1} - \vec{S}_x^{\,t} \right)}$,

$\vec{M}_x^{\,t+1}$ being the corrected command for the actuator means (41, 42, 43) for the dimension $x$ at the time $t+1$,

$\vec{M}_x^{\,t-1}$ being the uncorrected command for the actuator means (41, 42, 43) for the dimension $x$ at the time $t-1$,

$\vec{S}_x^{\,t}$ being the post-action object-sensor position information for the dimension $x$ at the time t after said actuator means (41, 42, 43) has been controlled according to the uncorrected command,

$\vec{S}_x^{\,t-1}$ being the targeted post-action object-sensor position information for the dimension $x$ at the time $t-1$, and $\alpha_x$ being a constant which controls the rate of adaptation for the dimension $x$.

The usage of said difference allows a correction of the calculated command for the actuator means 41, 42 and/or the robot 43 in a very accurate way since the amount of accuracy presently achieved by the command previously used to control the actuator means 41, 42 and/or the robot 43 explicitly is considered.

In order to implement the learning strategy of figure 3b, the calculation means can be adapted to calculate a difference between the targeted post-action position information and the pre-action position information by using the following formula:

$$\vec{S}_x'' = \vec{S}_x''^{-1} + \alpha_x \left( \hat{\vec{S}}_x''^{-1} - \vec{S}_x''^{-1} \right)$$

with $\vec{S}_x''$ being an adapted targeted post-action position for the dimension $x$ at the time t,

$\vec{S}_x''^{-1}$ being the targeted post-action position for the dimension $x$ at the time $t-1$,

$\hat{\vec{S}}_x''^{-1}$ being the pre-action reference pattern position for the dimension $x$ at the time $t-1$ and $\alpha_x$ being a constant (being larger than 0 and smaller than 1) which controls the rate of adaptation for the dimension $x$.

Since said reference location is chosen by using a reference-object which is located at the targeted post-action object-sensor position information it is guaranteed that the reference-object suits best for calibrating the respective action of the actuator means 41, 42 and/or the robot 43. Furthermore, even non-linearities in motor/sensor responses can be dealt with since this calibration is not performed by using a single pre-defined reference point but by using the reference-object located at the respective targeted post-action object-sensor position information. calculated command for the actuator means 41, 42 and/or 1.

The corrected commands, i.e. the adaptively learned mapping function, can be stored by the computing means 3 in said storing means 7 in said command-map.

The commands stored in the command map are used by the computing means 3 to calculate any new commands for the actuator means 41, 42 and the robot 43, respectively.

By automatically comparing a post-action output of the sensor means with a pre-action output of the sensor means and using said comparison result to correct the calculated command for the actuator means the inventive method allows an auto-calibration of the orienting system and an adaptation to changing and uncontrolled environments.

Therefore, the present invention provides a method of controlling an orienting system and a self-calibrating orienting system, which allows automatic calibration of the system without human intervention with high accuracy. Furthermore, the inventive method of controlling orienting system and the inventive self-calibrating orienting system is adapted to deal with non-linearities in motor/sensor responses and is suitable to be used in a changing and/or uncontrolled environment where maintenance is not possible or desired. Thus, a long-time operation of the inventive system and method without human interference is possible.

The inventive system is simpler, more flexible and requires less maintenance than self-orienting / self-calibrating systems of the prior art. A change in the geometry of the inventive system is possible without necessitating a new calibration of the actuator means and the sensor means.

A typical example of application for the inventive system and method is the focussing operation of a camera of a robot, surveillance by an automatic camera or a pointing device, for example. A robot provided with a camera provided and an orienting system according to the present invention can thus focus on recognized objects and eventually move towards them in order to manipulate them.

**Claims**

1. A method for controlling an orienting/positioning system,
   the orienting system comprising at least one sensor means (1) and actuator means (41, 42, 43) for controlling an orienting and/or positioning action of the sensor means (1),
   the method comprising the following steps:

   - (S1) Evaluating pre-action output information of said sensor means (1) in order to detect the position of a pattern in the input space of the sensor means (1);
   - (S2) Deciding on a targeted post-action position of said pattern (2) in the input space of said sensor means (1);
   - (S3) Defining a command for the actuator means (41, 42, 43) by mapping any deviation of the pre-action position and the targeted post-action position in the input space coordinates of the sensor means (1) to actuator control coordinates using a predefined mapping function;
   - (S4) Orienting/positioning the sensor means (1) by the actuator means (41, 42, 43) according to the defined command in order to carry out an orienting/positioning action;
   - (S5) Detecting the real post-action position of the pattern (2) in the input space of said sensor means (1);
   and
   - (S6) adapting the mapping function used in step S3 based on any difference of the real post-action position and the targeted post-action position of the pattern in the input space of the sensor means (1) in order to carry out an incremental adaptive learning of the mapping function,

wherein steps S1 to S6 are cyclically repeated at least once using the respectively adapted mapping function,
**characterised in that** in step S6 a correction signal is calculated on the basis of the pre-action reference position which has actually been moved to the targeted post-action position when carrying out the action instead of the pre-action position of Step S1, and

- the mapping function is adapted taking into account the correction signal and the executed actuator command.

2. A method according to claim 1,
**characterised in that**
in step S6

- a correction signal is calculated based on any difference of the real post-action position and the targeted position of the pattern in the input space of the sensor means (1), and
- the mapping function is adapted taking into account the correction signal, the executed actuator command and the pre-action position of the pattern in the input space of the sensor means (1).

3. A method of controlling an orienting system according to claim 2,
**characterised in that**
before adaptation of the mapping function, the adaptation vector is multiplied with a factor larger than or equal to 0 and smaller than or equal to 1 in order to control the adaptation rate for the mapping function.

4. A method of controlling an orienting system according to any of claims 2 or 3,
**characterised in that**
the method further comprises the step of

- computing a confidence value based on the comparison between sensor patterns before and after the action was executed; and
- modulating the adaptation vector with the confidence value such that the adaptation rate depends on the confidence value.

5. A method according to any of the preceding claims
**characterised in that**
the mapping function is implemented by means of a look-up table.

6. A method according to any of the preceding claims,
**characterised in that**
in steps S1 to S6, for each cycle, not only the position of the pattern, but also a neighbourhood in a defined range surrounding this position is used.

7. A method according to claim 6,
**characterised in that**
the range of the neighbourhood can be changed between two subsequent cycles.

8. A method according to any of the preceding claims,
**characterised in that**
the adaptation of the mapping function is carried out in the sensor coordinates.

9. A method according to any of the claims 1 to 8,
**characterised in that**
the adaptation of the mapping function is carried out in the actuator coordinates.

10. A computer software product adapted for implementing a method according to any of the preceding claims when running on a computing device.

11. An auto-calibrating orienting/positioning system, comprising at least one sensor means (1), computing means and actuator means (41, 42, 43) for controlling an orienting and/or positioning action of the sensor means (1),
the computing means comprising:

- means for evaluating pre-action output information of said sensor means (1) in order to detect the position of a pattern in the input space of the sensor means (1);
- means for deciding on a targeted post-action position of said pattern (2) in the input space of said sensor means (1);
- means for commanding the actuator means (41, 42, 43), the command being generated by mapping any deviation of the pre-action position and the targeted post-action position in the input space of the sensor means (1) to actuator control coordinates using a predefined mapping function;
- means for detecting the real post-action position of the pattern (2) in the input space of said sensor means (1);
- means for calibrating the mapping function based on any difference of the real post-action position and the targeted post-action position of the pattern in the input space of the sensor means (1) in order to carry out an incremental adaptive learning of the mapping function, and
**characterised in that** it comprises
- means for calculating a correction signal on the basis of the pre-action reference position which has actually been moved to the targeted post-action position when carrying out the action, and wherein the mapping function is calibrated taking into account the correction signal and the executed actuator command.

12. A system according to claim 11,
**characterised by**
means for calculating a correction signal based on any difference of the real post-action position and the targeted position of the pattern in the input space of the sensor means (1),
wherein the mapping function is calibrated taking into account the correction signal, the executed actuator command and the pre-action position of the pattern in the input space of the sensor means (1).

13. A system according to claim 12,
**characterised in that**
before the calibration of the mapping function, the adaptation vector is multiplied with a factor larger than or equal to 0 and smaller than or equal to 1 in order to control the adaptation rate for the mapping function.

14. A system according to any of claims 12 or 13,
**characterised by**

- means for computing a confidence value based on the correlation of selected sensor patterns before and after the action was executed, and
- means for modulating the adaptation with the confidence value such that the adaptation rate depends on the confidence value.

15. A system according to any of claims 12 to 15,
**characterised in that**
the mapping function is implemented by means of a look-up table.

16. A system according to any of claims 12 to 15,
**characterised in that**
the sensor means comprise at least one of a camera and a microphone.

**Patentansprüche**

1. Verfahren zum Steuern eines Orientierungs-/Positionierungssystems,
wobei das Orientierungssystem zumindest eine Sensoreinrichtung (1) und eine Stellgliedeinrichtung (41, 42, 43) aufweist, um eine Orientierungs- und/oder Positionierungsaktion der Sensoreinrichtung (1) zu steuern,
wobei das Verfahren die folgenden Schritte aufweist:

- (S1) Auswerten einer Voraktions-Ausgabeinformation der Sensoreinrichtung (1), um die Position eines Musters im Eingangsraum der Sensoreinrichtung (1) zu erfassen;
- (S2) Entscheiden über eine Ziel-Nachaktionsposition des Musters (2) im Eingangsraum der Sensoreinrichtung (1);
- (S3) Definieren eines Befehls für die Stellgliedeinrichtung (41, 42 43) durch Abbilden einer Abweichung der Voraktionsposition und der Ziel-Nachaktionsposition in den Eingangsraum-Koordinaten der Sensoreinrichtung (1) zu Stellglied-Steuerkoordinaten unter Verwendung einer vorgegebenen Abbildungsfunktion;
- (S4) Orientieren/Positionieren der Sensoreinrichtung (1) durch die Stellgliedeinrichtung (41, 42, 43) gemäß dem definierten Befehl, um eine Orientierungs-/Positionierungsaktion auszuführen;
- (S5) Erfassen der realen Nachaktionsposition des Musters (2) im Eingangsraum der Sensoreinrichtung (1); und
- (S6) Anpassen der Abbildungsfunktion, welche im Schritt S3 verwendet wird, auf Basis einer Differenz der realen Nachaktionsposition und der Ziel-Nachaktionsposition des Musters im Eingangsraum der Sensoreinrichtung (1), um ein inkrementales adaptives Lernen der Abbildungsfunktion auszuführen,

wobei die Schritte S1 bis S6 zumindest einmal unter Verwendung der entsprechend angepassten Abbildungsfunktion zyklisch wiederholt werden,
**dadurch gekennzeichnet, dass** im Schritt S6 ein Korrektursignal auf Basis der Voraktions-Referenzposition, die tatsächlich zur Ziel-Nachaktionsposition bewegt wurde, wenn die Aktion ausgeführt wird, anstelle der Voraktionsposition des Schritts S1 berechnet wird, und

- die Abbildungsfunktion angepasst wird, wobei das Korrektursignal und der ausgeführte Stellgliedbefehl in betracht gezogen werden.

2. Verfahren nach Anspruch 1,
**dadurch gekennzeichnet, dass**
im Schritt S6

- ein Korrektursignal auf Basis einer Differenz der realen Nachaktionsposition und der Zielposition des Musters im Eingangsraum der Sensoreinrichtung (1) berechnet wird, und
- die Abbildungsfunktion angepasst wird, indem das Korrektursignal, der ausgeführte Stellgliedbefehl und die Voraktionsposition des Musters im Eingangsraum der Sensoreinrichtung (1) in betracht gezogen werden.

3. Verfahren zum Steuern eines Orientierungssystems nach Anspruch 2,
**dadurch gekennzeichnet, dass**
vor Adaption der Abbildungsfunktion der Adaptionsvektor mit einem Faktor multipliziert wird, der größer als oder gleich 0 oder kleiner als oder gleich 1 ist, um die Adaptionsrate für die Abbildungsfunktion zu steuern.

4. Verfahren zum Steuern eines Orientierungssystems nach einem der Ansprüche 2 oder 3,
**dadurch gekennzeichnet, dass**
das Verfahren außerdem die Schritte aufweist:

- Berechnen eines Vertrauenswerts auf Basis des Vergleichs zwischen Sensormustern, bevor und nachdem die Aktion ausgeführt wurde; und
- Modulieren des Adaptionsvektors mit dem Vertrauenswert, so dass die Adaptionsrate vom Vertrauenswert abhängt.

5. Verfahren nach einem der vorhergehenden Ansprüche,
**dadurch gekennzeichnet, dass**
die Abbildungsfunktion mittels einer Nachschlagetabelle verwirklicht wird.

6. Verfahren nach einem der vorhergehenden Ansprüche,
**dadurch gekennzeichnet, dass**
in den Schritten S1 bis S6 für jeden Zyklus nicht nur die Position des Musters, sondern auch eine Nachbarschaft in einem definierten Bereich, der diese Position umgibt, verwendet wird.

7. Verfahren nach Anspruch 6,
**dadurch gekennzeichnet, dass**
der Bereich der Nachbarschaft zwischen zwei aufeinanderfolgenden Zyklen geändert werden kann.

8. Verfahren nach einem der vorhergehenden Ansprüche,
**dadurch gekennzeichnet, dass**
die Adaption der Abbildungsfunktion in den Sensorkoordinaten ausgeführt wird.

9. Verfahren nach einem der Ansprüche 1 bis 8,
**dadurch gekennzeichnet, dass**
die Adaption der Abbildungsfunktion in den Stellglied-Koordinaten ausgeführt wird.

10. Computer-Software-Produkt, welches angepasst ist, ein Verfahren nach einem der vorhergehenden Ansprüche durchzuführen, wenn dies auf einer Computereinrichtung abläuft.

11. Automatisches Kalibrierungs-Orientierungs-/Positionierungssystem, welches zumindest eine Sensoreinrichtung (1), eine Berechnungseinrichtung und eine Stellgliedeinrichtung (41, 42, 43) aufweist, um eine Orientierungs- und/oder Positionierungsaktion der Sensoreinrichtung (1) zu steuern,
wobei die Berechnungseinrichtung aufweist:

- eine Einrichtung zum Auswerten von Voraktions-Ausgangsinformation der Sensoreinrichtung (1), um die Position eines Musters im Eingangsraum der Sensoreinrichtung (1) zu erfassen;
- eine Einrichtung zum Entscheiden über eine Ziel-Nachaktionsposition des Musters (2) im Eingangsraum der Sensoreinrichtung (1);
- eine Einrichtung zum Befehligen der Stellgliedeinrichtung (41, 42, 43), wobei der Befehl durch Abbildung einer Abweichung der Voraktionsposition und der Ziel-Nachaktionsposition im Eingangsraum der Sensoreinrichtung (1) erzeugt wird, um Koordinaten unter Verwendung einer vorgegebenen Abbildungsfunktion stellgliedzusteuern;
- eine Einrichtung zum Erfassen der realen Nachaktionsposition des Musters (2) im Eingangsraum der Sensoreinrichtung (1);
- eine Einrichtung zum Kalibrieren der Abbildungsfunktion auf Basis einer Differenz der realen Nachaktionsposition und der Ziel-Nachaktionsposition des Musters im Eingangsraum der Sensoreinrichtung (1), um ein inkrementales adaptives Lernen der Abbildungsfunktion auszuführen, und **dadurch gekennzeichnet, dass** diese aufweist:

- eine Einrichtung zum Berechnen eines Korrektursignals auf Basis der Voraktions-Referenzposition, welche tatsächlich zur Ziel-Nachaktionsposition verschoben wird, wenn die Aktion durchgeführt wird, und wobei die Abbildungsfunktion kalibriert wird, indem das Korrektursignal und der ausgeführte Stellgliedbefehl in betracht gezogen werden.

12. System nach Anspruch 11,
**gekennzeichnet durch**
eine Einrichtung zum Berechnen eines Korrektursignals auf Basis einer Differenz der realen Nachaktionsposition und der Zielposition des Musters im Eingangsraum der Sensoreinrichtung (1),
wobei die Abbildungsfunktion kalibriert wird, wobei das Korrektursignal, der ausgeführte Stellgliedbefehl und die Voraktionsposition des Musters im Eingangsraum der Sensoreinrichtung (1) in betracht gezogen werden.

13. System nach Anspruch 12,
**dadurch gekennzeichnet, dass**
vor der Kalibrierung der Abbildungsfunktion der Adaptionsvektor mit einem Faktor größer als oder gleich 0 und kleiner als oder gleich 1 multipliziert wird, um die Adaptionsrate für die Abbildungsfunktion zu steuern.

14. System nach einem der Ansprüche 12 oder 13, **gekennzeichnet durch**

   - eine Einrichtung zum Berechnen eines Vertrauenswerts auf Basis der Korrelation der ausgewählten Sensormuster, bevor und nachdem die Aktion ausgeführt wurde, und
   - eine Einrichtung zum Modulieren der Adaption mit dem Vertrauenswert, so dass die Adaptionsrate vom Vertrauenswert abhängt.

15. System nach einem der Ansprüche 12 bis 15, **dadurch gekennzeichnet, dass**
die Abbildungsfunktion mittels einer Nachschlagetabelle verwirklicht wird.

16. System nach einem der Ansprüche 12 bis 15, **dadurch gekennzeichnet, dass**
die Sensoreinrichtung zumindest eines von einer Kamera und einem Mikrophon aufweist.

**Revendications**

1. Procédé de commande d'un système d'orientation/de positionnement,
le système d'orientation comprenant au moins des moyens formant capteur (1) et des moyens formant actionneur (41, 42, 43) pour commander une action d'orientation et/ou de positionnement des moyens formant capteur (1),
le procédé comprenant les étapes consistant à :

   (S1) évaluer des informations de sortie de pré-action desdits moyens formant capteur (1) afin de détecter la position d'un modèle dans l'espace d'entrée des moyens formant capteur (1) ;
   (S2) décider d'une position cible de post-action dudit modèle (2) dans l'espace d'entrée desdits moyens formant capteur (1) ;
   (S3) définir une commande pour les moyens formant actionneur (41, 42, 43) en mappant n'importe quelle déviation de la position de pré-action et de la position cible de post-action dans les coordonnées de l'espace d'entrée des moyens formant capteur (1) à des coordonnées de commande d'actionneur en utilisant une fonction de mappage prédéfinie ;
   (S4) orienter/positionner les moyens formant capteur (1) par les moyens formant actionneur (41, 42, 43) selon la commande définie afin d'exécuter une action d'orientation/positionnement ;
   (S5) détecter la position réelle de post-action du modèle (2) dans l'espace d'entrée desdits moyens formant capteur (1) ; et
   (S6) adapter la fonction de mappage utilisée à l'étape S3 sur la base de n'importe quelle différence de la position réelle de post-action et de la position cible de post-action du modèle dans l'espace d'entrée des moyens formant capteur (1) afin d'exécuter un apprentissage incrémental adaptif de la fonction de mappage,

dans lequel les étapes S1 à S6 sont répétées cycliquement au moins une fois en utilisant la fonction de mappage respectivement adaptée,
**caractérisé en ce que**, à l'étape S6, un signal de correction est calculé sur la base de la position de référence de pré-action qui a été en fait déplacée vers la position cible de post-action lors de l'exécution de l'action, au lieu de la position de pré-action de l'étape S1, et **en ce que**
la fonction de mappage est adaptée en prenant en compte le signal de correction et la commande d'actionneur exécutée.

2. Procédé selon la revendication 1, **caractérisé en ce que** à l'étape S6
un signal de correction est calculé sur la base de n'importe quelle différence de la position réelle de post-action et de la position cible du modèle dans l'espace d'entrée des moyens formant capteur (1), et la fonction de mappage est adaptée en prenant en compte le signal de correction, la commande d'actionneur exécutée et la position de pré-action du modèle dans l'espace d'entrée des moyens formant capteur (1).

3. Procédé de commande d'un système d'orientation selon la revendication 2, **caractérisé en ce que**
avant l'adaptation de la fonction de mappage le vecteur d'adaptation est multiplié par un facteur supérieur ou égal à 0 et inférieur ou égal à 1 afin de contrôler la vitesse d'adaptation pour la fonction de mappage.

4. Procédé de commande d'un système d'orientation selon l'une des revendications 2 ou 3, **caractérisé en ce que** le procédé comprend en outre l'étape consistant à
calculer une valeur de confiance sur la base d'une comparaison entre modèles de capteur, avant et après l'exécution de l'action ; et
moduler le vecteur d'adaptation avec la valeur de confiance de telle sorte que la vitesse d'adaptation dépend de la valeur de confiance.

5. Procédé selon l'une quelconque des revendications précédentes, **caractérisé en ce que**
la fonction de mappage est mise en oeuvre au moyen d'une table de conversion.

**6.** Procédé selon l'une quelconque des revendications précédentes, **caractérisé en ce que** aux étapes S1 à S6, pour chaque cycle, non seulement la position du modèle, mais aussi un espace environnant dans une plage définie entourant cette position, sont utilisés.

**7.** Procédé selon la revendication 6, **caractérisé en ce que** la plage de l'espace environnant peut être modifiée entre deux cycles suivants.

**8.** Procédé selon l'une quelconque des revendications précédentes, **caractérisé en ce que** l'adaptation de la fonction de mappage est exécutée dans les coordonnées de capteur.

**9.** Procédé selon l'une quelconque des revendications 1 à 8, **caractérisé en ce que** l'adaptation de la fonction de mappage est exécutée dans les coordonnés d'actionneur.

**10.** Produit logiciel informatique adapté pour mettre en oeuvre un procédé selon l'une quelconque des revendications précédentes lorsqu'il tourne sur un dispositif informatique.

**11.** Système d'orientation/de positionnement auto-calibrant, comprenant au moins des moyens formant capteur (1), des moyens de calcul et des moyens formant actionneur (41, 42, 43) pour commander une action d'orientation et/ou de positionnement des moyens formant capteur (1), les moyens de calcul comprenant :

des moyens destinés à évaluer des informations de sortie de pré-action desdits moyens formant capteur (1) afin de détecter la position d'un modèle dans l'espace d'entrée des moyens formant capteur (1) ;
des moyens destinés à décider d'une position de post-action cible dudit modèle (2) dans l'espace d'entrée desdits moyens formant capteur (1) ;
des moyens destinés à commander des moyens formant actionneur (41, 42, 43), la commande étant générée par mappage de n'importe quelle déviation de la position de pré-action et de la position de post-action cible dans l'espace d'entrée des moyens formant capteur (1) à des coordonnées de commande d'actionneur utilisant une fonction de mappage prédéfinie ;
des moyens de détection de la position de post action réelle du modèle (2) dans l'espace d'entrée desdits moyens formant capteur (1)
des moyens de calibrage de la fonction de mappage sur la base de n'importe quelle différence de la position réelle de post-action et de la position cible de post-action du modèle dans l'espace d'entrée des moyens formant capteur (1) afin d'exécuter un apprentissage incrémental adaptatif de la fonction de mappage, et **caractérisé en ce qu'**il comprend

des moyens de calcul d'un signal de correction sur la base de la position de référence de pré-action qui a été en fait déplacée vers la position cible de post-action lors de l'exécution de l'action, et

dans lequel la fonction de mappage est calibrée en prenant en compte le signal de correction et la commande d'actionneur exécutée.

**12.** Système selon la revendication 11, **caractérisé par** des moyens de calcul d'un signal de correction sur la base de n'importe quelle différence de la position réelle de post-action et de la position cible de post-action du modèle dans l'espace d'entrée des moyens formant capteur (1), dans lequel la fonction de mappage est calibrée en prenant en compte le signal de correction, la commande d'actionneur exécutée et la position de pré-action du modèle dans l'espace d'entrée des moyens formant capteur (1).

**13.** Système selon la revendication 12, **caractérisé en ce que** avant le calibrage de la fonction de mappage, le vecteur d'adaptation est multiplié par un facteur supérieur ou égal à 0 et inférieur ou égal à 1 afin de contrôler la vitesse d'adaptation pour la fonction de mappage.

**14.** Système selon l'une quelconque des revendications 12 ou 13, **caractérisé par** des moyens de calcul d'une valeur de confiance sur la base de la corrélation de modèles de capteur sélectionnés, avant et après l'exécution de l'action ; et des moyens de modulation de l'adaptation avec la valeur de confiance de telle sorte que la vitesse d'adaptation dépende de la valeur de confiance.

**15.** Système selon l'une quelconque des revendications 12 à 15, **caractérisé en ce que** la fonction de mappage est mise en oeuvre au moyen d'une table de conversion.

**16.** Système selon l'une quelconque des revendications 12 à 15, **caractérisé en ce que** les moyens formant capteur comprennent au moins un parmi une caméra et un microphone.

Fig. 1

```
┌─────────────┐        ┌─────────────┐
│   Sensors   │───────▶│  Decision   │
│             │        │   Making    │
└─────────────┘        └─────────────┘
       │                      │
       ▼                      ▼
┌─────────────┐        ┌─────────────┐
│  Orienting  │◀───────│ Closed-form │
│   Device    │        │  Mapping    │
└─────────────┘        └─────────────┘
```

Fig. 2

Fig. 3a

Fig. 3b

$\vec{S}^{t-1}$

$\vec{S}^{t}$

Sensor array

Old mapping

New mapping

$\vec{M}^{t}$ $\vec{M}^{t-1}$

Motor array

Fig. 4a

$\hat{\vec{S}}^{t}$ $\vec{S}^{t-1}$

$\vec{O}$

Sensor array

Old mapping

New mapping

$\vec{M}^{t-1}$

Motor array

Fig. 4b

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Cooperation of neural networks applied to a robotic hand-eye coordination task. **KUHN D et al.** SYSTEMS, MAN AND CYBERNETICS, 1995. INTELLIGENT SYSTEMS FOR THE 21ST CENTURY., IEEE INTERNATIONAL CONFERENCE ON VANCOUVER. IEEE, 22 October 1995, vol. 4, 3694-3699